# EUROPEAN PATENT SPECIFICATION

(11) **EP 3 591 813 B1**
(45) Date of publication and mention of the grant of the patent: **05.05.2021**
(21) Application number: 19184811.8
(22) Date of filing: 05.07.2019
(51) Int. Cl.: H02K 5/15, H02K 5/00, H02K 7/14

(54) **ROTATING ELECTRIC MACHINE**
ELEKTRISCHE DREHMASCHINE
MACHINE ÉLECTRIQUE ROTATIVE

(30) Priority: 06.07.2018 US 201862694696 P
(43) Date of publication of application: 08.01.2020
(73) Proprietor: Weg Equipamentos Elétricos S.A., 89256-900 Jaraguá do Sul, SC (BR)
(72) Inventor: ADILSON PASSIG, Jhonatan, 89254800 JARAGUÁ DO SUL, SC (BR); LAFIN, Patrick, 89254800 JARAGUÁ DO SUL, SC (BR); SCHMIDT FERREIRA, Alexandre, 89254800 JARAGUÁ DO SUL, SC (BR)
(74) Representative: Cabinet Beaumont

(56) References cited:
- EP-A2- 0 942 514
- DE-A1-102008 002 288
- DE-A1-102016 217 449
- US-A1- 2016 294 247

## Description

### FIELD OF THE INVENTION

The present invention relates to a rotating electric machine and, more specifically, to a flange fastening system for a rotating electric machine.

### BACKGROUND OF THE INVENTION

Several different types of electric machine shells are known in the art, which basically comprise a shell where the parts and components of the machines are enclosed.

As known to those skilled in the art, the shell is adapted to enclose a number of internal components and also to receive a series of external fittings and components, which are secured to the shell by different fastening systems.

For example, the shells also usually comprise flanges that assist the coupling of the rotating electric machine to other machines or equipment. Normally, the flanges are adapted to the desired coupling type, and the flange type is usually associated to the constructive form of the machine.

To ensure correct and fault-free coupling, the flange usually goes through a machining process, to avoid gaps and coupling failures. This process ends up being laborious and costly.

Document DE 10 2016 217449 discloses a gear unit including a gear housing with at least one locking component for a form and / or force-locking mounting of an electrical motor to the gear unit. The locking component is configured as a circumferential edge or flange collar, in which a number of undercuts are incorporated, in which the electric motor can be locked by a form or force-locking connection.

Document US 2016/294247 discloses a device for fixing an electric machine to a component of a motor vehicle, comprising a central through-opening for receiving a round bearing sleeve of the electric machine.

Document EP 0 942 514 discloses a motor with a carrier bearing plate attached to its stator housing on the driven side with a flange ring from a group of flange rings attached to it.

Document DE 10 2008 002288 discloses a holding flange for an electric machine, in particular for a starter of an internal combustion engine, for fastening the electric machine to a bearing bracket on the internal combustion engine, wherein the holding flange has a centered circular opening.

### OBJECTS OF THE INVENTION

It is an object of the present invention to provide a rotating electric machine with an improved flange fastening system, which eliminates the need for machining the flange.

It is still another object of the present invention to provide a rotating electric machine with an improved flange construction.

It is a further object of the present invention to provide a rotating electric machine, in which the end of the shell is shaped with a receiving interchangeable flange interface.

It is still another object of the present invention to provide a rotating electric machine with a shell comprising, formed in the shell itself, a receiving interchangeable flange interface capable of overlapping different flange coupling sizes.

### SUMMARY OF THE INVENTION

The present invention refers to a rotating electric machine, according to claim 1, having a shell comprising a flange attachment system, wherein the shell comprises a flange portion incorporated in a front portion of the shell, the flange portion being configured to receive interchangeable flanges.

The receiving flange interface is capable of receiving interchangeable flanges having different coupling sizes.

The receiving interchangeable flange interface comprises at least one engaging portion cooperating with a corresponding engaging portion of the interchangeable flange.

In one embodiment of the invention, the receiving interchangeable flange interface comprises three depressions cooperating with three corresponding engaging portions of the interchangeable flange. The engaging portions of the interchangeable flange receiving interface and the interchangeable flange are of the dovetail type, wherein the engaging portions of the flange receiving portion are male and the corresponding engaging portions of the interchangeable flange are female.

In an embodiment of the invention, the engaging portions of the interchangeable flange receiving interface are formed in a substantially circular recess of the interchangeable flange receiving interface, and the corresponding engaging portions of the interchangeable flange portions are formed on protrusions with a curved outer profile.

The interchangeable flange receiving interface may further comprise at least a depression configured to receive at least one guiding protrusion provided on the interchangeable flange.

In one embodiment of the invention, the interchangeable flange receiving interface comprises three depression guides and the interchangeable flange comprises three corresponding guiding protrusions.

The interchangeable flange receiving interface may further comprise at least one drilling for passage of an axial fastening screw of the flange; and the interchangeable flange may comprise a corresponding through hole, so as to allow the passage of the axial fastening screw of the flange.

The interchangeable flange receiving interface may further comprise a drain cavity extending radially between the circular depression and a perimetric edge of the interchangeable flange receiving interface.

In addition, the interchangeable flange receiving interface may further comprise hexagonal holes configured to fasten a coupling.

### BRIEF DESCRIPTION OF THE DRAWINGS

The present invention will be described in more detail hereinafter with reference to the accompanying drawings in which:
**Figure 1** is a side view of an electric machine according to the present invention;
**Figure 2** is a perspective view of an electric machine according to the present invention, the shell being illustrated without the interchangeable flange;
**Figure 3** - is a front view of the shell of an electric machine in accordance with the present invention;
**Figure 4** - is a front perspective view of the interchangeable flange in accordance with the present invention; and

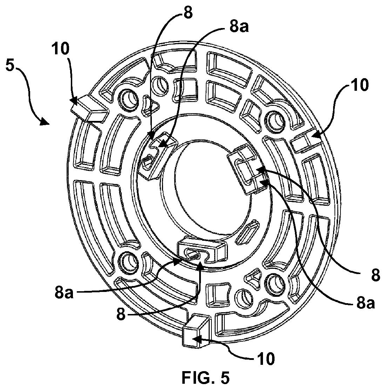

**Figure 5** - is a rear perspective view of the interchangeable flange in accordance with the present invention.

### DETAILED DESCRIPTION OF THE INVENTION

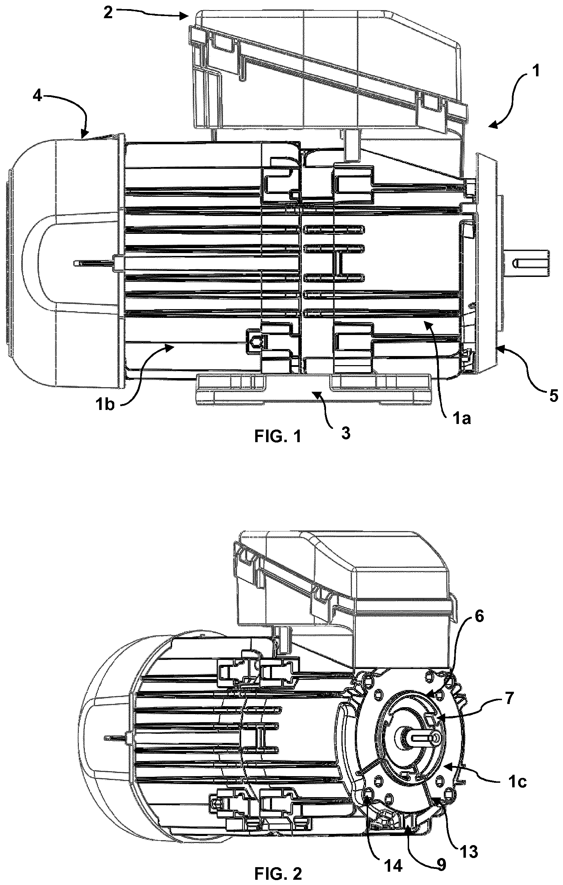

Figure 1 shows an electric machine incorporating the interchangeable flange solution of the present invention.

Although the present invention is depicted incorporated in an electric motor, it should be understood that the solution of the invention could also be applied to other electrical machines comprising a shell, for example, any rotating electric machine having such characteristics.

As can be seen in Figure 1, the electric motor comprises a shell split in the axial direction 1, formed by a first shell part 1a and a second shell part 1b.

It should be pointed out, however, that the present invention could be embodied in electric machines with shells having different constructive characteristics, such as, for example, of the type comprising a one-piece main shell with end caps.

As known to those skilled in the art, the shell of a motor encloses a series of internal components and receives a series of external fittings and components, which are secured to the shell by different fastening systems. Thus, as external components, the electric motor of Figure 1 has a terminal box 2, a foot 3 and a deflector cap 4.

The present invention comprises a flange fastening system wherein the end of the shell is shaped/formed as a flange portion 1c of generic construction, said flange portion being configured to receive interchangeable flanges 5.

"Generic" construction, as used by the present invention, should be understood as a construction that is capable of receiving flanges with different coupling systems.

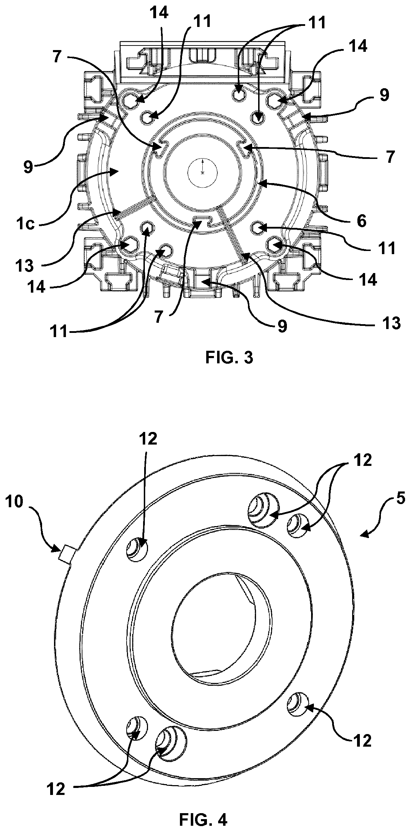

As better illustrated in Figures 2 and 3, the flange portion 1c comprises a configuration ready for overmounting, and the flange portion 1c is shaped with an interchangeable flange receiving interface 1c.

The shaping is carried out in the process of forming the shell, for example, in the process of casting, molding or injecting the shell.

In an embodiment of the present invention, the interchangeable flanges are interchangeable polymeric flanges which can be mounted on the interchangeable flange receiving interface 1c. It should be pointed out, however, that the flanges could be made of other materials.

Naturally, a plurality of different interchangeable flanges 9 may be configured for mounting to the portion 1c, so that such flanges may meet different sizes of coupling. In this way, the assembly process is simplified, and the assembly time and operations are reduced.

The interchangeable flange receiving interface 1c of the shell comprises a substantially circular shoulder 6 wherein at least one engaging portion 7 cooperates with a corresponding engaging portion 8 of the interchangeable flange 5. In the embodiments illustrated in the figures, the substantially circular shoulder delimits a central circular cavity, which center has a hole for the passage of the machine shaft. According this embodiment, the engaging 7 extends axially in the edge wall of the internal circular cavity.

The substantially circular shoulder 6 is preferably concentric to the passage hole of the electric machine shaft.

In the embodiment of the invention shown in the figures, the substantially circular shoulder 6 comprises three engaging portions 7 which cooperate with three corresponding engaging portions 8 of the interchangeable flange 5.

In the embodiment of the invention shown in the figures, the engaging portions 7, 8 have a dovetail configuration, the engaging portions 7 of the interchangeable flange receiving interface 1c of the male-type and the corresponding engaging portions of the interchangeable flange 5 are of the female-type formed on protrusions with a curved outer profile 8a.

The curved outer profile of the protrusions 8a corresponds to the circular profile of the edge wall of the internal cavity of the circular shoulder 6, so as to provide easier and safer engagement between the parts. Further, the interaction between the edge wall of the cavity of the circular shoulder 6 and the curved profile of the protrusions 8a helps to guide the assembly into engagement between the parts.

In the embodiment shown in the figures, the corresponding flange engaging parts 8 are formed in the vicinity of the central hole of the flange.

The interchangeable flange receiving interface 1c further comprises at least one guiding depression 9, near the perimetric edge of the interface, configured to receive at least one corresponding guiding protrusion 10 provided near the perimetric edge of the interchangeable flange 5.

In the embodiment shown in the figures, the interchangeable flange receiving interface 1c comprises three guiding depressions 9 and the interchangeable flange 5 comprises three corresponding guiding protrusions 10.

The interchangeable flange receiving interface 1c may comprise at least one drilling 11 for axially fastening screws of the flange. In this embodiment, the interchangeable flange 5 comprises a corresponding through hole 12, so as to allow passage of the fastening screw.

In the embodiment shown in the figures, the interchangeable flange receiving interface 1c has six drillings 11 and the interchangeable flange 5 has six corresponding through holes 12.

The interchangeable flange receiving interface 1c may further comprise a drain cavity 13 which extends radially between the circular shoulder 6 and the perimetric edge of the interchangeable flange receiving interface 1c. The drain cavity 13 is particularly useful for vertical shell applications.

In the embodiment of the drawings, the interchangeable flange receiving interface 1c has two cavities 13 that can be used in different positions of assemblies of the rotating electric machine,

The interchangeable flange receiving interface 1c may further comprise hexagonal holes 14. The hexagonal holes can be used for fastening an aluminum flange, or a flange of other suitable material, that is compatible with the interchangeable flange receiving interface 1c.

Having described examples of embodiments of the present invention, it should be understood that the scope of the present invention encompasses other possible variations of the inventive concept described, being limited solely by the wording of the appended claims, including the possible equivalents.

## Claims

1. A rotating electric machine of the type comprising a shell housing an active core with a rotor and a stator, the rotor being mounted on a shaft, the machine being wherein:
the shell (1) comprises an end portion shaped as an interchangeable flange receiving interface (1c) configured to receive an interchangeable flange (5), the interchangeable flange receiving interface (1c) comprising at least two engaging portions (7) which cooperate with at least two corresponding engaging portions (8) of the interchangeable flange (5),
**characterized in that**:
the interchangeable flange receiving interface (1c) comprises a substantially circular shoulder (6) defining an internal circular cavity with an edge wall, and the at least two engaging portions (7) are formed as male engaging portions with dovetail interface configuration that project from the edge wall to the internal circular cavity;
the at least two corresponding engaging portions (8) of the interchangeable flange (5) are formed as female engaging portions (8) of dovetail interface configuration, the female engaging portions (8) of dovetail interface configuration being formed in protrusions with a curved outer profile (8a), so that the curved outer profile of the protrusions (8a) corresponds to a circular profile of the edge wall of the internal circular cavity of the circular shoulder (6);
the interchangeable flange (5) further comprises a perimetric circular edge with at least one corresponding guiding protrusion (10) provided near said perimetric edge; and
the interchangeable flange receiving interface (1c) further comprises a perimetric circular edge with at least one guiding depression (9) near said perimetric edge, the at least one guiding depression (9) being configured to receive the at least one corresponding guiding protrusion (10) provided near said perimetric edge of the interchangeable flange (5).

2. Machine according to claim 1, wherein the interchangeable flange receiving interface (1c) comprises three guiding depressions (9) and the interchangeable flange (5) comprises three corresponding guiding protrusions (10).

3. Machine according to claim 1, **characterized in that**:
the interchangeable flange receiving interface (1c) comprises at least one drilling (11) for the passage of an axial fastening screw of the flange; and
the interchangeable flange (5) comprises a corresponding through hole (12) so as to allow the axial fastening screw of the flange to pass.

4. Machine according to claim 1 or 2, wherein the interchangeable flange receiving interface (1c) further comprises two drain cavities (13) extending radially between the circular shoulder (6) and a perimetric edge of the flange receiving interface (1c).

5. Machine, according to any one of claims 1 to 4, wherein the interchangeable flange (5) is a polymeric flange.

6. Machine according to any one of Claims 1 to 5, wherein the interchangeable flange receiving interface (1c) further comprises hexagonal holes (14) configured to fasten an aluminum flange.

## Patentansprüche

1. Rotierende elektrische Maschine des Typs, der ein Gehäuse mit einem aktiven Kern mit einem Rotor und einem Stator aufnimmt, wobei der Rotor auf einer Welle montiert ist, wobei:
das Gehäuse (1) einen Endabschnitt aufweist, der als austauschbare Flanschaufnahmeschnittstelle (1c) geformt ist, die konfiguriert ist, um einen austauschbaren Flansch (5) aufzunehmen (5), wobei die austauschbare Flanschaufnahmeschnittstelle (1c) mindestens zwei Eingriffsabschnitte (7) aufweist, die mit mindestens zwei entsprechenden Eingriffsabschnitten (8) des austauschbaren Flansches (5) zusammenwirken,
**dadurch gekennzeichnet, dass**:
die austauschbare Flanschaufnahmeschnittstelle (1c) eine im Wesentlichen kreisförmige Schulter (6) aufweist, die einen inneren kreisförmigen Hohlraum mit einer Randwand definiert, und die mindestens zwei Eingriffsabschnitte (7) als Vorsprungs-Eingriffsabschnitte mit einer Schwalbenschwanz-Schnittstellenkonfiguration ausgebildet sind, die von der Randwand in den inneren kreisförmigen Hohlraum ragen;
die mindestens zwei entsprechenden Eingriffsabschnitte (8) des austauschbaren Flansches (5) als Aufnahme-Eingriffsabschnitte (8) mit einer Schwalbenschwanz-Schnittstellenkonfiguration ausgebildet sind, wobei die Aufnahme-Eingriffsabschnitte (8) der Schwalbenschwanz-Schnittstellenkonfiguration in Vorsprüngen mit einem gekrümmten Außenprofil (8a) ausgebildet sind, so dass das gekrümmte Außenprofil der Vorsprünge (8a) mit einem kreisförmigen Profil der Randwand des inneren kreisförmigen Hohlraums der kreisförmigen Schulter (6) entspricht;
der austauschbare Flansch (5) ferner einen umlaufenden kreisförmigen Rand aufweist mit mindestens einem entsprechenden Führungsvorsprung (10), der in der Nähe des Umfangsrandes vorgesehen ist; und
die austauschbare Flanschaufnahmeschnittstelle (1c) ferner einen kreisförmigen Umfangsrand mit mindestens einer Führungsvertiefung (9) in der Nähe des Umfangsrandes aufweist, wobei die mindestens eine Führungsvertiefung (9) konfiguriert ist, um den mindestens einen entsprechenden Führungsvorsprung (10) aufzunehmen, der in der Nähe des Umfangsrandes des austauschbaren Flansches (5) vorgesehen ist.

2. Maschine nach Anspruch 1, wobei die austauschbare Flanschaufnahmeschnittstelle (1c) drei Führungsvertiefungen (9) aufweist und der austauschbare Flansch (5) drei entsprechende Führungsvorsprünge (10) aufweist.

3. Maschine nach Anspruch 1, **dadurch gekennzeichnet, dass**
die austauschbare Flanschaufnahmeschnittstelle (1c) mindestens eine Bohrung (11) für den Durchgang einer axialen Befestigungsschraube des Flansches aufweist; und
der austauschbare Flansch (5) eine entsprechende Durchgangsbohrung (12) aufweist, um den Durchgang der axialen Befestigungsschraube des Flansches zu ermöglichen.

4. Maschine nach Anspruch 1 oder 2, wobei die austauschbare Flanschaufnahmeschnittstelle (1c) ferner zwei Abflusshohlräume (13) aufweist, die sich radial zwischen der kreisförmigen Schulter (6) und einem umlaufenden Rand der Flanschaufnahmeschnittstelle (1c) erstrecken.

5. Maschine nach einem der Ansprüche 1 bis 4, wobei der austauschbare Flansch (5) ein polymerer Flansch ist.

6. Maschine nach einem der Ansprüche 1 bis 5, wobei die austauschbare Flanschaufnahmeschnittstelle (1c) ferner Sechskantlöcher (14) aufweist, die zur Befestigung eines Aluminiumflansches konfiguriert sind.

## Revendications

1. Machine électrique tournante du type comprenant une coque abritant un cœur actif comportant un rotor et un stator, le rotor étant monté sur un arbre, la machine étant telle que :
la coque (1) comprend une partie d'extrémité ayant la forme d'une interface de réception de flasque interchangeable (1c) agencée pour recevoir un flasque interchangeable (5), l'interface de réception de flasque interchangeable (1c) comprenant au moins deux parties de couplage (7) qui coopèrent avec au moins deux parties de couplage correspondantes (8) du flasque interchangeable (5),
**caractérisée en ce que** :
l'interface de réception de flasque interchangeable (1c) comprend un épaulement sensiblement circulaire (6) définissant une cavité circulaire interne avec une paroi de bord, et lesdites au moins deux parties de couplage (7) sont façonnées sous forme de parties de couplage mâles ayant une configuration d'interface en queue d'aronde qui font saillie à partir de la paroi de bord vers la cavité circulaire interne ;
lesdites au moins deux parties de couplage correspondantes (8) du flasque interchangeable (5) sont façonnées sous forme de parties de couplage femelles (8) de configuration d'interface en queue d'aronde, les parties de couplage femelles (8) de configuration d'interface en queue d'aronde étant formées dans des protubérances avec un profil extérieur courbe (8a), de sorte que le profil extérieur courbe des protubérances (8a) correspond à un profil circulaire de la paroi de bord de la cavité circulaire interne de l'épaulement circulaire (6) ;
le flasque interchangeable (5) comprend en outre un bord circulaire périmétrique muni d'au moins une protubérance de guidage correspondante (10) prévue à proximité du bord périmétrique ; et
l'interface de réception de flasque interchangeable (1c) comprend en outre un bord circulaire périmétrique muni d'au moins un creux de guidage (9) à proximité du bord périmétrique, ledit au moins un creux de guidage (9) étant agencé pour recevoir ladite au moins une protubérance de guidage correspondante (10) prévue à proximité du bord périmétrique du flasque interchangeable (5).

2. Machine selon la revendication 1, dans laquelle l'interface de réception de flasque interchangeable (1c) comprend trois creux de guidage (9) et le flasque interchangeable (5) comprend trois protubérances de guidage correspondantes (10).

3. Machine selon la revendication 1, **caractérisée en ce que** :
l'interface de réception de flasque interchangeable (1c) comprend au moins un alésage (11) pour le passage d'une vis de fixation axiale du flasque ; et
le flasque interchangeable (5) comprend un trou traversant (12) de manière à permettre le passage de la vis de fixation axiale du flasque.

4. Machine selon la revendication 1 ou 2, dans laquelle l'interface de réception de flasque interchangeable (1c) comprend en outre deux cavités d'évacuation (13) s'étendant radialement entre l'épaulement circulaire (6) et un bord périmétrique de l'interface de réception de flasque (1c).

5. Machine selon l'une quelconque des revendications 1 à 4, dans laquelle le flasque interchangeable (5) est un flasque polymère.

6. Machine selon l'une quelconque des revendications 1 à 5, dans laquelle l'interface de réception de flasque interchangeable (1c) comprend en outre des trous hexagonaux (14) agencés pour fixer un flasque en aluminium.
